Europäisches Patentamt

European Patent Office

Office européen des brevets

(11) Veröffentlichungsnummer: **0 006 490**
**B1**

(12) ## EUROPÄISCHE PATENTSCHRIFT

(45) Veröffentlichungstag der Patentschrift:
**09.12.81**

(51) Int. Cl.³: **C 08 F 10/06**, C 08 F 6/28

(21) Anmeldenummer: **79101764.3**

(22) Anmeldetag: **05.06.79**

(54) Verfahren zur Rückgewinnung von nicht umgesetztem Propylen bei der Massepolymerisation.

(30) Priorität: **15.06.78 DE 2826196**

(43) Veröffentlichungstag der Anmeldung:
**09.01.80 Patentblatt 80/1**

(45) Bekanntmachung des Hinweises auf die Patenterteilung:
**09.12.81 Patentblatt 81/49**

(84) Benannte Vertragsstaaten:
**BE DE FR GB IT NL**

(56) Entgegenhaltungen:
**FR-A-1 534 224**
**GB-A-1 020 766**
**GB-A-1 040 669**

(73) Patentinhaber: **HOECHST AKTIENGESELLSCHAFT,
Postfach 80 03 20, D-6230 Frankfurt/Main 80 (DE)**

(72) Erfinder: **Mayer, Gunter, Dr., Grüner Weg 17,
D-6240 Königstein/Taunus (DE)**
Erfinder: **Fischer, Eberhard, Dr., Am Waldeck 8,
D-6233 Kelkheim (Taunus) (DE)**
Erfinder: **Strametz, Helmut, Dr., Unterlindau 72,
D-6000 Frankfurt am Main (DE)**

Verfahren zur Rückgewinnung von nicht umgesetztem Propylen bei der Massepolymerisation

Die Erfindung betrifft ein Verfahren zur Reinigung und Rückgewinnung von Propylen aus Suspensionspolymerisationsanlagen zur Herstellung von Polypropylen, wobei das Suspensionsmittel überwiegend aus Propylen besteht (sog. Massepolymerisation).

Die Erfindung betrifft ebenso die Ausschleusung des während der Polymerisation gebildeten, vorwiegend ataktischen Polypropylen, von isotaktischem Feinkorn, von Katalysatorresten und zusätzlichen Suspensionsmitteln aus der Anlage.

Die Polymerisation von Propylen im flüssigen Monomeren, gegebenenfalls in Gegenwart von Comonomeren wie Äthylen und höheren α-Olefinen ist bekannt. Die Reaktion wird in Rührkesseln oder Schleifenreaktoren durchgeführt. Nach beendeter Polymerisation liegt eine Mischung vor, die festes Polypropylen suspendiert im überschüssigen flüssigen Propylen sowie Katalysatorreste enthält. Weiterhin sind in dem flüssigen Propylen amorphes Polypropylen und gegebenenfalls niedermolekulares isotaktisches Polypropylen gelöst. Zur Aufarbeitung dieser Mischung sind mehrere Verfahren bekannt.

So ist es bekannt, diese Suspension zur Monomer/Polymertrennung einer Flash-Verdampfung zu unterwerfen, wobei jedoch die oben genannten gelösten Bestandteile auf das Produkt aufziehen und dessen Qualität mindern. Zusätzlich müssen die Brüden wieder komprimiert werden, bevor sie wirtschaftlich kondensiert werden können (vgl. GB-PS 10 40 669).

Diese Nachteile lassen sich durch den Einsatz eines Druckdekanters oder einer Waschkolonne umgehen, wobei in jedem Fall ein Pulver mit relativ niedrigem Gehalt an ataktischem Polymerisat und Katalysatorresten der weiteren Aufarbeitung bzw. der Trocknung zugeführt wird.

Das aus den genannten Trennstufen abfliessende Monomere muss vor dem Wiedereinsatz in den Prozess aufbereitet, d.h. die gelösten Bestandteile müssen entfernt werden.

Es ist weiterhin bekannt, das Propylen in einer Rektifizierkolonne bei 40-55°C (vgl. DE-OS 15 20 569) oder in einem Flashverdampfer bei 40-70°C (vgl. JA-OS 52 005 881) zu verdampfen. Unter diesen Temperaturbedingungen ist mit Agglomerieren des Polymeren, Verkleben der Wärmeaustauschrohre und Kolonnenböden zu rechnen. Diese Verklebung entsteht auch in Wärmetauschern, die mit Hochdruckdampf beheizt sind.

Ein anderes Verfahren arbeitet im überkritischen Bereich des Propylens, wobei nach Phasentrennung das ataktische Polypropylen flüssig abgezogen wird. Unbefriedigend bleibt, dass bei diesem Prozess die hohe Reaktionswärme der Polymerisation nicht ausgenutzt werden kann, da sie auf einem tiefen Temperaturniveau liegt (vgl. JA-OS 75 020 046).

Es wurde nun gefunden, das die Nachteile der vorgenannten Verfahren dann nicht auftreten, wenn man das Polypropylen bei so niedrigen Temperaturen verdampft, dass trotz überschreiten der Löslichkeitsgrenze für das ataktische Polymere dieses noch nicht zum Quellen und Agglomerieren bzw. Kleben neigt, sondern feinflokkig ausfällt.

Gegenstand der Erfindung ist somit das in den Ansprüchen genannte Verfahren.

Zur Durchführung des erfindungsgemässen Verfahrens werden Propylen oder Mischungen von Propylen mit Äthylen und/oder höheren 1-Olefinen der Formel $CH_2 = CHR$, worin R einen Alkylrest mit 2 bis 10 Kohlenstoffatomen bedeutet, in an sich bekannter Weise in einem Rührkessel oder Schleifenreaktor polymerisiert. Die Temperaturen betragen je nach Katalysatorsystem 60-75°C, die Verweilzeiten im Reaktor 2-6 Std., Wasserstoff dient als Molekulargewichtsregler, falls ein solcher erforderlich ist.

Für die Durchführung der Polymerisation können die bekannten, hoch stereospezifischen Katalysatorsysteme eingesetzt werden, z.B. eine Kombination einer durch Reduktion von $TiCl_4$ mit Aluminium oder aluminiumorganischen Verbindungen des Typs $AlR_n^1X_{3-n}$, wobei $R^1$ einen Alkylrest mit 2 bis 16 Kohlenstoffatomen und X ein Halogenatom darstellt und $1 \leqq n \leqq 3$ ist, hergestellten und einer thermischen Nachbehandlung unterzogenen $TiCl_3$-haltigen Komponente mit einer aluminiumorganischen Verbindung der Formel $AlR_m^1 X_{3-m}$ als Aktivator, wobei $R^1$ wiederum einen Alkylrest mit 2 bis 16 Kohlenstoffatomen und X ein Halogenatom darstellt und $1 \leqq m \leqq 3$ ist. Auch kann eine mit komplexierenden Verbindungen nachbehandelte $TiCl_3$-Komponente Verwendung finden, oder man kann die Stereospezifität des Katalysatorsystems durch den Zusatz sogenannter Drittkomponenten zur Polymerisationsmischung erhöhen, oder beide Massnahmen miteinander kombinieren.

Es kann aber auch eine andere $TiCl_3$-Komponente verwendet werden, sofern sie in Kombination mit einem der oben erwähnten Aktivatoren ein hochstereospezifisches Katalysatorsystem ergibt, wie z.B. handelsübliche Katalysatorkomponenten der Zusammensetzung $TiCl_3 \cdot \frac{1}{3} AlCl_3$ allein oder in Verbindung mit Komplexbildnern zur Erhöhung der Stereospezifität.

Geeignete komplexierende Verbindungen sind beispielsweise Äther, Thioäther, Thiole, Phosphine, Amine, Amide, Ketone oder Ester. Geeignete Drittkomponenten zur Erhöhung der Stereospezifität sind beispielsweise Cyclopolyene und phosphorhaltige Verbindungen.

Es kann aber auch ein Katalysatorsystem eingesetzt werden, das als feste Komponente Magnesiumchlorid, gegebenenfalls Elektronendonatoren und eine Verbindung des drei- oder vierwertigen Titans enthält und mit einm Aktivator kombiniert wird. Als Elektronendonatoren kommen beispielsweise sauerstoff- oder stickstoffhaltige organische Verbindungen wie Ester und Amine zur Anwendung. Als Aktivatoren werden vorzugsweise aluminiumorganische Verbindungen verwendet.

Aus dem Reaktor wird eine Suspension erhalten, welche 20 bis 60 Gew.-% pulverförmiges kritallines Polypropylen, 0,5 bis 10% gelöstes ataktisches Polymer und Katalysatorreste neben unumgesetztem Propylen enthält. Gegebenenfalls kann ein inertes Dispergiermittel zugegen sein. Das feste Polypropylen wird durch Sedimentation, Filtration oder Zentrifugieren aus der Suspension abgetrennt und kann gegebenenfalls mit flüssigem Propylen oder dem vorgenannten Dispergiermittel gewaschen werden.

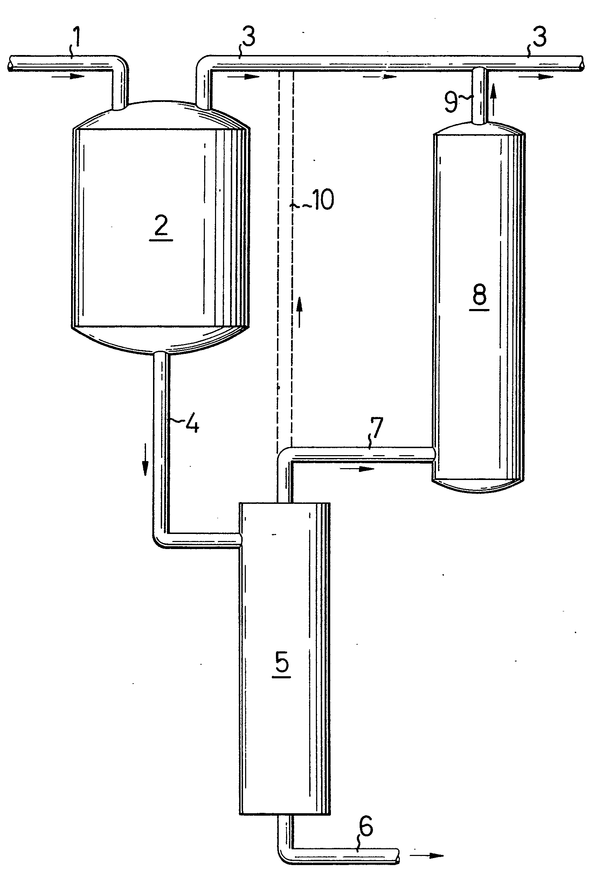

Die das gelöste Polypropylen enthaltende Mischung und die Waschflüssigkeiten werden nun in die erste Stufe einer mehrstufigen Propylen-Rückgewinnungsanlage gegeben. Wie die Figur zeigt, fliessen die vorgenannten Lösungen durch die Leitung 1 in den Verdampfer 2. Dieser Verdampfer ist vorzugsweise ein Umlaufverdampfer, welcher vorzugsweise mit dem Kühlmedium des Polymerisationsreaktors beheizt wird und damit die Polymerisationswärme ausnutzt. In diesem Verdampfer werden bei einer Temperatur von 0 bis +35°C, vorzugsweise 20 bis 30°C und einem Druck von 6 bis 15 bar, 50 bis 95, vorzugsweise 80 bis 90 Gew.-% des in der Mischung enthaltenden Propylens verdampft, welches durch die Leitung 3 zum Kondensator strömt.

Die eingedickte Mischung, die noch Propylen, Polypropylen in gelöster und/oder dispergierter Form, sowie Katalysatorreste und gegebenenfalls ein inertes Dispergiermittel enthält, gelangt durch die Leitung 4 in einen weiteren Verdampfer 5 zur Abtrennung des restlichen Propylens. Dieser Verdampfer ist ein solcher mit Zwangsförderung, wie beispielsweise ein Dünnschichtverdampfer. Das Aufkonzentrieren kann ein- oder mehrstufig erfolgen. Die Anlage kann im Gleich- oder Gegenstrom bei einer Temperatur von 150 bis 300°C und einem Druck von 1 bis 15 bar betrieben werden. Dabei fällt das ataktische Polypropylen in flüssiger Form an und wird durch die Leitung 6 aus der Anlage ausgetragen. Das verdampfte Propylen strömt durch die Leitung 7 in eine Feinreinigungsanlage 8, z.B. eine Destillationskolonne oder einen Adsorptionssturm, und von dort durch die Leitung 9 zum Kondensator. Falls das Propylen schon rein genug aus dem Verdampfer 5 kommt, kann es bereits durch die Leitung 10 zum Kondensator geleitet werden.

Die Vorteile des erfindungsgemässen Verfahrens liegen zunächst darin, das keine Agglomeration des ataktischen und/oder niedermolekularen Polymerisats auftritt, somit ein Verstopfen der Wärmeaustauschrohre und/oder Verklebung der Kolonnenböden nicht auftritt. Vorteilhaft ist weiterhin, dass die Reaktionswärme der Polymerisation zur Verdampfung des Propylens ausgenutzt werden kann. Das bedeutet eine beträchtliche Einsparung an Energie.

Ein weiterer Vorteil dieses Verfahrens ist es, dass auf Grund der niedrigen Siedetemperatur schwersiedende Katalysatorreste, andere hochsiedende Hilfsstoffe wie z.B. Stereoregulatoren und auch nicht abgetrenntes isotaktisches feines Polypropylen-Pulver quantitativ im Sumpf der Verdampfungseinrichtung abgeschieden werden und damit in vielen Fällen auf eine zusätzliche Reinigung des in der Verdampfungseinrichtung verdampften Propylen, beispielsweise durch Adsorption oder Destillation, verzichtet werden kann.

Beispiel

1. Herstellung des Katalysators

Die Herstellung der Katalysatorkomponente kann beispielsweise wie nachstehend beschrieben erfolgen, wobei dies jedoch die Verwendung andersartig hergestellter Katalysatorkomponenten nicht ausschliessen soll:

In einem 10-l-Rührgefäss werden unter Ausschluss von Luft und Feuchtigkeit 1090 ml einer hydrierten, sauerstoffreien Benzinfraktion (Kp 140 bis 165°C) und 550 ml Titantetrachlorid (5 Mol) vorgelegt und bei 0°C innerhalb von 8 Stunden unter Rühren (250 U/Min) und Stickstoffüberlagerung eine Lösung von 1111,2 g Aluminiumäthylsesquichlorid (enthält 4,5 Mol Aluminiumdiäthylmonochlorid) in 334 g der Benzinfraktion zugetropft. Es scheidet sich ein rotbrauner feiner Niederschlag aus. Dann wird 2 Stunden bei 0°C und anschliessend 12 Stunden bei Raumtemperatur gerührt.

Darauf wird die Suspension 4 Stunden auf 90°C erhitzt und danach weitere 6 Stunden auf 110°C. Der ausgeschiedene Niederschlag wird nach dem Absitzen von der überstehenden Mutterlauge durch Dekantieren getrennt und fünfmal mit je 2000 ml der Benzinfraktion gewaschen. Das gewaschene feste Reaktionsprodukt wird wieder in der Benzinfraktion suspendiert und die Suspension auf eine Konzentration von 2 Mol $TiCl_3$/Liter eingestellt. Die Bestimmung des Gehaltes der Suspension an dreiwertigem Titan erfolgt durch Titration mit einer Ce(IV)-Lösung.

Die Suspension wird jetzt unter Rühren auf 80°C erhitzt, worauf man innerhalb von 30 Minuten 0,95 Mol Di-n-Butyläther pro Mol $TiCl_3$ zugetropft. Anschliessend wird die Suspension eine Stunde bei 80°C gehalten. Bei der Zugabe des Äthers färbt sich die Mutterlauge olivgrün. Danach wird das feste $TiCl_3$-haltige Reaktionsprodukt fünfmal mit je 500 ml der Benzinfraktion pro Mol $TiCl_3$ gewaschen.

Das gewaschene feste Reaktionsprodukt wird wieder in der Benzinfraktion suspendiert und die Suspension in einem grösseren Rührbehälter auf eine Konzentration von 0,01 Mol $TiCl_3$/Liter verdünnt. Daraufhin gibt man 0,02 Mol Aluminiumdiäthylomonochlorid sowie 0,005 Mol Cycloheptatrien-(1, 3, 5) pro Liter Kontaktsuspension zu und rührt eine Stunde bei Raumtemperatur.

2. Polymerisation

In einen Rohrreaktor von 360 l Inhalt werden stündlich 60 kg Propylen eingepumpt, weiterhin 0,3 Mol/h Aluminium-diäthylomonochlorid, 3 Liter der zuvor hergestellten, vorstehend beschriebenen Mischung der Katalysatorkomponenten, entsprechend 0,03 Mol $TiCl_3$, 0,06 Mol Aluminium-diäthylmonochlorid und 0,015 Mol Cycloheptatrien-(1, 3, 5), sowie 20 N1 Wasserstoff.

Nach einer Verweilzeit von 3 Stunden bei 68 °C und einem Reaktordruck von 35 bar werden 20 kg/h Polypropylenpulver zusammen mit 40 kg/h Propylen Mutterlauge aus dem Reaktor abgezogen. Die Suspension wird zur Entspannung auf 12 bar und Phasentrennung durch Sedimentation in einen Behälter geleitet.

Das abgetrennte und getrocknete Pulver hat einen MFI 230/5 von 3,5 g/10 min. Die aus dem Sedimentationsgefäss ablaufende Mutterlauge, die 2% ataktisches Polypropylen enthält, läuft in einen Umlaufverdampfer (Nr. 2 der Figur) von 1 qm Verdampferfläche, der bei 25 °C, 12 bar und mit dem Kühlwasser des Reaktors als Heizmittel betrieben wird.

Nach Abdampfen von ca. 80% des Propylen werden stündlich ca. 5 kg einer Suspension, die 12% ataktisches Polypropylen enthält, in einen Dünnschichtverdampfer von 0,25 m² Fläche gepumpt, der bei 240 °C Aussentemperatur betrieben wird (Nr. 5 der Figur). Als Sumpfprodukt werden 0,6 kg ataktisches Polypropylen in flüssiger Form über eine Zahnradpumpe abgezogen.

Der Umlaufverdampfer arbeitet im Dauerbetrieb ohne Belagsbildung.

Vergleichsbeispiel

Katalysatorherstellung und Polymerisation werden wie in Beispiel 1 durchgeführt, Sedimentationsgefäss und Umlaufverdampfer jedoch bei 60 °C betrieben.

Werden wieder 5 kg/h Suspension aus dem Umlaufverdampfer abgepumpt, so enthält sie 12% ataktisches Polypropylen, das zum Quellen und Agglomerieren neigt.

Nach 6 Tagen Betriebszeit sind die Wärmetauscherrohre verklebt und müssen gereinigt werden.

**Patentansprüche**

1. Verfahren zur Rückgewinnung des nicht umgesetzten Propylens aus der bei der Polymerisation von Propylen oder einer Mischung von Propylen mit Äthylen und/oder einem 1-Olefin der Formel $CH_2 = CHR$, worin R einen Alkylrest mit 2 bis 10 Kohlenstoffatomen bedeutet, in flüssigem Propylen als Suspendiermedium, nach Abtrennung des entstandenen festen Polymeren anfallenden und im wesentlichen flüssigen Propylen und ataktisches Polymeres enthaltenden Mutterlauge durch Verdampfen, dadurch gekennzeichnet, dass in einem ersten Verdampfer bei einer Temperatur von 0 bis 35 °C bis 95 Gew.-% des Propylens verdampft werden und danach das restliche Propylen in einer Verdampfungseinrichtung mit Zwangsförderung bei einer Temperatur von 150 bis 300 °C verdampft wird.

2. Verfahren nach Anspruch 1, dadurch gekennzeichnet, dass die Verdampfung des Propylens in der zweiten Verdampfungseinrichtung in mehreren Stufen erfolgt.

3. Verfahren nach Anspruch 1, dadurch gekennzeichnet, dass man zum Verdampfen des Propylens im ersten Verdampfer die Rekationswärme der Polymerisation ausnutzt.

**Claims**

1. A process for recovering the unreacted propylene from the mother liquor obtained in the polymerization of propylene or of a mixture of propylene and ethylene and/or of a 1-olefin of the formula $CH_2 = CHR$ with R being alkyl having from 2 to 10 carbon atoms, in liquid propylene as suspension medium, upon separation of the solid polymer formed, and containing mainly propylene and atactic polymer, which comprises evaporating of from 50 to 95 weight % of the propylene in a first evaporator at a temperature of from 0 to 35 °C and subsequently evaporating the residual propylene in a second evaporator with forced conveyance at a temperature of from 150 to 300 °C.

2. The process as claimed in claim 1, which comprises carrying out the evaporation of the propylene in a second evaporation system in several steps.

3. The process as claimed in claim 1, which comprises utilizing the reaction heat of the polymerization for the evaporation of the propylene in the first evaporator.

**Revendications**

1. Procédé pour récupérer le propylène qui n'a pas réagi à partir de la liqueur-mère obtenue dans la polymérisation du propylène, ou d'un mélange de propylène et d'éthylène et/ou d'une α-oléfine de formule $CH_2 = CHR$ dans laquelle R désigne un radical alkyle en $C_2$-$C_{10}$, dans du propylène liquide comme milieu de suspension, après séparation du polymère solide formé, liqueur-mère qui contient essentiellement du propylène liquide et un polymère atactique, par évaporation, procédé caractérisé en ce qu'on évapore, dans un premier évaporateur, à une température de 0 à 35 °C, de 50 à 95% en poids du propylène, après quoi on évapore le propylène restant dans un dispositif d'évaporation à circulation forcée, à une température de 150 à 300 °C.

2. Procédé selon la revendication 1, caractérisé en ce que l'évaporation du propylène dans le deuxième dispositif d'évaporation est effectuée en plusieurs étapes.

3. Procédé selon la revendication 1, caractérisé en ce que, pour évaporer le propylène, on utilise, dans le premier évaporateur, la chaleur de la réaction de polymérisation.